# EUROPÄISCHE PATENTSCHRIFT

(11) **EP 3 390 068 B1**
(45) Veröffentlichungstag und Bekanntmachung des Hinweises auf die Patenterteilung: **19.05.2021**
(21) Anmeldenummer: 16822141.4
(22) Anmeldetag: 15.12.2016
(51) Int. Cl.: B42D 25/41, B42D 25/25, B42D 25/369, B42D 25/26

(54) **GEGENSTAND MIT INFORMATIONEN SOWIE VERFAHREN ZUM AUFBRINGEN UND AUSLESEN DER INFORMATIONEN DES GEGENSTANDS**
OBJECT COMPRISING INFORMATION, AND METHOD FOR APPLYING AND READING THE INFORMATION TO/ON THE OBJECT
OBJET CONTENANT DES INFORMATIONS, ET PROCÉDÉ POUR AFFICHER ET LIRE LES INFORMATIONS DUDIT OBJET

(30) Priorität: 15.12.2015 DE 102015121822
(43) Veröffentlichungstag der Anmeldung: 24.10.2018
(73) Patentinhaber: Bogen Electronic GmbH, 14163 Berlin (DE)
(72) Erfinder: BECKER, Torsten, 14109 Berlin (DE)
(74) Vertreter: PATERIS Patentanwälte PartmbB
(86) Internationale Anmeldenummer: PCT/EP2016/081228
(87) Internationale Veröffentlichungsnummer: WO 2017/102967

(56) Entgegenhaltungen:
- WO-A1-2013/139969
- DE-A1-102005 042 895
- DE-A1-102007 052 477
- DE-A1-102010 041 398
- US-A1- 2014 077 485

## Beschreibung

Die Erfindung betrifft einen Gegenstand mit einem Druckbereich, ein Verfahren zum Aufbringen von Informationen auf den Gegenstand und ein Verfahren zum Auslesen von Informationen aus dem Gegenstand.

Herkömmlich werden Produkte auf unterschiedliche Weisen gekennzeichnet. Beispielsweise kann ein Produkt mit einem Barcode oder einem QR-Code versehen werden, die beispielsweise auf eine Verpackung des Produkts aufgedruckt sind. Der Barcode und der QR-Code sind durch ein optisches Verfahren erfassbar und durch einen Vergleich mit einer Datenbank kann das Produkt identifiziert werden. Auch kann ein Produkt mit einer Seriennummer versehen werden, die beispielsweise in dem Produkt eingraviert sein kann. Auch hier kann die Seriennummer durch das optische Verfahren erfassen werden. Nachteilig ist jedoch, dass durch eine Verschmutzung das optische Verfahren fehleranfällig wird.

Auch ist es möglich ein Produkt magnetisch zu kennzeichnen. Beispielsweise weist ein Parkticket einen magnetischen Film auf, der durch Magnetisieren beschrieben werden kann. Der beschriebene Film kann anschließend durch ein magnetisches Verfahren ausgelesen werden.

Die Dokumente WO 2013/139969 A1, US 2014/077485 A1, DE 10 2005 042895 A1 und DE 10 2007 052477 A1 offenbaren Gegenstände mit magnetischer Information.

Ferner offenbart Dokument DE 10 2010 041398 A1 einen Gegenstand gemäß dem Oberbegriff des Anspruchs 1.

Auch ist es üblich, in einem RFID (englisch: radio-frequency identification, deutsch: Identifizierung mit Hilfe elektromagnetischer Wellen)-Verfahren beispielsweise Produkte oder Lebewesen mit einem Transponder zu versehen. Der Transponder weist einen kennzeichnenden Code auf, der mittels einem Lesegerät ausgelesen werden kann. Nachteilig an dem RFID-Verfahren sind jedoch die vergleichsweise hohen Kosten, insbesondere für den Transponder.

Aufgabe der Erfindung ist es einen Gegenstand zu schaffen, der in einer alternativen Weise mit Informationen gekennzeichnet ist, sowie ein alternatives Verfahren zum Aufbringen der Informationen und ein alternatives Verfahren zum Auslesen der Informationen zu schaffen.

Die Aufgabe wird gelöst mit den Merkmalen der Patentansprüche 1, 10 und 13.

Der erfindungsgemäße Gegenstand ist in Anspruch 1 definiert.

Die unterschiedlichen magnetischen Eigenschaften können darin bestehen, dass die Teilbereiche magnetisiert bzw. nicht magnetisiert sind, dass die Teilbereiche hartmagnetisch bzw. weichmagnetisch sind, dass die Teilbereiche magnetisch anisotrop bzw. magnetisch isotrop sind, dass die Teilbereiche in unterschiedliche Raumrichtungen anisotrop sind und/oder dass die Teilbereiche ferromagnetisch bzw. nicht ferromagnetisch sind. Das farbige Druckmittel kann jede beliebige Farbe wie auch die Farbe Schwarz und/oder die Farbe Weiß aufweisen. Bei dem Druckmittel kann es sich beispielsweise um eine magnetische Tinte handeln. Die magnetische Tinte kann beispielsweise von Hand oder mittels eines Tintenstrahldruckers auf den Gegenstand aufgebracht sein.

Mittels des Gegenstands ist es vorteilhaft möglich durch die unterschiedlichen magnetischen Eigenschaften zusätzliche Informationen in dem Muster unterzubringen. Dadurch können auf dem Gegenstand Informationen in platzsparender Weise untergebracht werden beziehungsweise es ist möglich, mehr Informationen auf einem Bereich des Gegenstands unterzubringen als es mit dem Muster alleine möglich ist. Die Teilbereiche mit dem unterschiedlichen magnetischen Eigenschaften können derart aufgebracht sein, dass sie für das menschliche Auge oder für ein optisches Messverfahren unsichtbar sind, so dass es gleichsam möglich ist, Informationen in dem Muster zu verstecken.

Bevorzugt sind die wenigstens zwei Teilbereiche derart unabhängig von dem optisch erkennbaren Muster angeordnet, dass wenigstens ein Randabschnitt eines der Teilbereiche nicht übereinstimmend mit einem Randabschnitt eines einfarbigen Musterbereichs des Musters angeordnet ist.

Es ist bevorzugt, dass der Druckbereich wenigstens einen inhomogenen Bereich aufweist, wobei der inhomogene Bereich entweder eine einheitliche Farbe und eine nicht einheitliche Magnetisierung aufweist, oder eine einheitliche Magnetisierung und eine nicht einheitliche Farbe aufweist. Dadurch ist es vorteilhaft möglich farbliche Informationen und magnetische Informationen zu kombinieren. So ist es möglich eine Information derart zu codieren, dass sich diese Information nur lesen lässt, wenn die farbliche Information und die magnetische Information zusammengeführt werden. Dadurch ist es möglich eine Information stärker zu verschlüsseln als es möglich wäre wenn die farbliche Information und die magnetische Information unabhängig voneinander verschlüsselt würden.

Es ist bevorzugt, dass das Druckmittel einen Farbstoff und/oder Pigmente aufweist, die Pigmente die magnetisierbaren und/oder magnetischen Partikel aufweisen, und/oder das Druckmittel einen Füllgrad von 40 Vol-% bis 70 Vol-% an den magnetisierbaren und/oder magnetischen Partikeln aufweist. Das Druckmittel weist im Übrigen im Wesentlichen ein Bindemittel auf, wobei auch zusätzlich ein Lösungsmittel vorgesehen sein kann. Das Bindemittel sorgt für eine Haftung des Druckmittels an dem Gegenstand. Das Lösungsmittel kann vorgesehen werden, um den Farbstoff zu lösen. Durch den Anteil von 40 Vol-% bis 70 Vol-% an magnetisierbaren und/oder magnetischen Partikeln ist vorteilhaft eine starke Magnetisierbarkeit des Musters bei gleichzeitig einer starken Haftung erreicht. Besonders bevorzugt ist hierbei ein Füllgrad von ungefähr 50 Vol-%. Aus Kostengründen ist es besonders vorteilhaft, wenn die Pigmente die magnetisierbaren und/oder magnetischen Partikel aufweisen, weil es nicht erforderlich ist, zu dem Farbstoff und/oder den Pigmenten zusätzlich noch die magnetisierbaren Partikel bereitzustellen.

Es ist bevorzugt, dass die magnetisierbaren Partikel Pigmente, keramische Partikel und/oder Seltenerdmetalle aufweisen, die magnetischen Partikel hartmagnetische Partikel, Pigmente, Mikromagneten, keramische Partikel und/oder Seltenerdmetalle aufweisen und/oder ein Mittelwert einer Verteilung von Größen der magnetisierbaren und/oder magnetischen Partikel kleiner als 2 µm ist. Hartmagnetische Partikel sind vorteilhaft, weil sie hohe magnetische Feldstärken aufweisen. Pigmente sind vorteilhaft, weil sie sowohl als Magneten als auch als Farbstoff fungieren. Keramische Metalle sind aufgrund ihrer chemischen Resistenz vorteilhaft. Seltenerdenmetalle weisen hohe magnetische Feldstärken auf. Sind die magnetisierbaren Partikel beispielsweise kugelförmig, so bezeichnet die Größe den Partikeldurchmesser. Weicht die Form der magnetisierbaren Partikel von der Kugelform ab, so ist die Größe die längste in dem magnetisierbaren Partikel vorkommende Abmessung. Aufgrund der kleinen Größe der Partikel lassen sich die magnetisierbaren und/oder magnetischen Partikel, insbesondere wenn es sich um hartmagnetische Partikel handelt, die bereits magnetisiert vorliegen, in einem äußeren Magnetfeld besonders leicht ausrichten und somit lässt sich eine besonders starke Magnetisierung der Teilbereiche erreichen.

Es ist bevorzugt, dass der Druckbereich einen anisotropen Bereich aufweist, wobei der anisotrope Bereich eine magnetische Anisotropie mit einer bevorzugten Magnetisierungsrichtung aufweist, und wobei der Druckbereich einen weiteren anisotropen Bereich aufweist, wobei die bevorzugte Magnetisierungsrichtung des anisotropen Bereichs von einer bevorzugten Magnetisierungsrichtung des weiteren anisotropen Bereichs verschieden ist. Somit lassen sich Übergange von einem Teilbereich zu einem anderen Teilbereich vorteilhaft einfach durch den Wechsel der Richtung der magnetischen Feldstärkevektoren detektieren. Auch lassen sich zusätzliche Informationen in dem Muster unterbringen, die mittels der Richtung der magnetischen Feldstärkevektoren codiert werden.

Es ist bevorzugt, dass eine Information aus einer Gruppe aufweisend eine aus den Teilbereichen magnetisch erfassbare Information und eine in dem optisch erkennbaren Muster enthaltene, optisch erfassbare Information auswertbar ist in Abhängigkeit von der anderen in der Gruppe enthaltenen Information. Dadurch lassen sich Informationen vorteilhaft verschlüsseln. Eine Entschlüsselung der Informationen kann nur erfolgen, wenn sowohl die optisch erfassbaren Daten als auch die magnetisch erfassbaren Daten ausgelesen werden. Dabei ist es bevorzugt, dass eine Information aus der Gruppe einen logischen Schlüssel aufweist, wobei der logische Schlüssel zu einem Entschlüsseln der anderen in der Gruppe enthaltenen Information und/oder zu einem Verifizieren der anderen in der Gruppe enthaltenen Information verwendbar ist. Dadurch wird vorteilhaft der Schlüssel zum Entschlüsseln der verschlüsselten Daten gleich mit dem Gegenstand mitgeliefert.

Der Gegenstand weist bevorzugt ein industrielles Erzeugnis, ein industriell produziertes Erzeugnis, ein Ticket für eine Veranstaltung, ein Ticket für den öffentlichen Nahverkehr, ein Ticket für eine Mautzahlung, ein Ticket für einen Parkvorgang, eine Verpackung für Aufträge, eine Verpackung für Produkte, ein Etikett und/oder eine Verpackung für Medikamente auf, und aus den wenigstens zwei Teilbereichen ist bevorzugt eine Produktidentifizierung, eine Chargennummer einer Produktion, ein Ort der Produktion, ein Datum der Produktion, ein Mindesthaltbarkeitsdatum, ein Prüfzeichen einer Prüfstelle des Gegenstands, eine Produktbezeichnung, eine Seriennummer, ein charakteristisches Produktkennzeichen und/oder eine Uhrzeit ableitbar.

Es ist bevorzugt, dass aus den wenigstens zwei Teilbereichen eine Verwendungsinformation bezüglich einer Verwendung des Gegenstands in einer zur Verwendung des Gegenstands vorgesehenen Vorrichtung ableitbar ist. Damit ist vorteilhaft eine Automatisierung bei der Verwendung des Gegenstands in der Vorrichtung erreichbar.

Es ist bevorzugt, dass einer der wenigstens zwei Teilbereiche im Wesentlichen nicht magnetisiert ist, einer der wenigstens zwei Teilbereiche eine magnetische Polorientierung und/oder eine magnetische Anisotropie senkrecht oder parallel zu einer Druckoberfläche des Druckbereichs aufweist, und/oder die wenigstens zwei Teilbereiche eine mit einem Magnetleseverfahren erfassbare binäre Codierung aufweisen. Eine vorteilhaft fehlerfreie Auslesung kann erfolgen, wenn ein Übergang von einem im Wesentlichen nicht magnetisierten Teilbereich zu einem magnetisierten Teilbereich erfolgt oder wenn die Ausrichtung der magnetischen Feldstärkevektoren senkrecht oder parallel zur Druckoberfläche ist. Ebenfalls einfach lässt sich eine binäre Codierung auslesen, insbesondere, wenn die binäre Codierung durch die im Wesentlichen nicht magnetisierten Teilbereiche und die magnetisierten Teilbereiche oder durch Teilbereiche mit entgegen gerichteten magnetischen Feldstärkevektoren geschaffen ist.

Das erfindungsgemäße Verfahren zum Aufbringen von Informationen auf einen Gegenstand mit einem Druckbereich ist in Anspruch 10 definiert. Das Versehen kann bei dem Aufbringen des Druckbereichs auf dem Gegenstand erfolgen oder es kann zu einem beliebigen späteren Zeitpunkt erfolgen. Erfindungsgemäß ist vorgesehen, dass die durch die wenigstens zwei Teilbereiche geschriebenen Informationen gelöscht werden und/oder mit neuen Informationen überschrieben werden. Dadurch ist es vorteilhaft möglich, Informationen variabel in dem Druckbereich unterzubringen.

Um eine Agglomeration der magnetisierbaren und/oder magnetischen Partikel vor dem Drucken zu unterbinden, kann das Druckmittel gerührt werden und/oder es kann ein Sieb in einem Fluss des Druckmittels vorgesehen sein, dessen Maschen derart dimensioniert sind, dass einzelne magnetisierbare und/oder magnetische Partikel das Sieb penetrieren können, Agglomerate der Partikel hingegen von dem Sieb zurückgehalten werden.

Das Verfahren weist bevorzugt den Schritt auf: - Magnetisieren wenigstens eines Teilbereichs des Drucksbereichs, so dass der Druckbereich wenigstens zwei Teilbereiche mit zueinander unterschiedlichen magnetischen Eigenschaften hat.

Bevorzugt weist das Verfahren den Schritt auf: - vor einem Aushärten eines Bindemittels des Druckmittels, Ausbilden eines Magnetfelds in zumindest einem Teil des Druckbereichs mit Ausrichten der magnetisierbaren und/oder magnetischen Partikel des Druckmittels entlang der Feldlinien des Magnetfelds zum Erzeugen eines magnetisch anisotropen Bereichs. Dies eignet sich besonders für hartmagnetische Partikel, die bereits im magnetisierten Zustand in dem Druckmittel vorliegen. Die Teilbereiche mit den unterschiedlichen magnetischen Eigenschaften werden geschaffen, in dem die magnetisierbaren und/oder magnetischen Partikel durch das Magnetfeld orientiert werden und diese Orientierung durch das Aushärten des Bindemittels eingefroren wird. Die durch die wenigstens zwei Teilbereiche geschriebenen Informationen können erfindungsgemäß gelöscht werden und/oder mit neuen Informationen überschrieben werden, bevorzugt indem das Bindemittel geschmolzen wird und in zumindest einem Teil des Druckbereichs ein neues Magnetfeld ausgebildet wird. Das erfindungsgemäße Verfahren zum Auslesen von Informationen aus einem Gegenstand mit einem Druckbereich ist in Anspruch 13 definiert. Es ist auch möglich eine Information redundant in der optisch codierten Information und in der magnetisch codierten Information unterzubringen. Hier kann in dem Fall, dass eine Verschmutzung vorliegt, die Information immer noch zuverlässig aus der magnetisch codierten Information erfasst werden. Analog kann in dem Fall, dass die magnetisch codierte Information durch ein Magnetfeld überschrieben wurde, die Information immer noch zuverlässig aus der optisch codierten Information erfasst werden.

Bevorzugt weist das Verfahren den Schritt auf: - Bestimmen einer weiteren Information in Abhängigkeit von der optisch codierten Information und der magnetisch codierten Information. Es ist bevorzugt, dass die magnetisch codierte Information eine magnetische Anisotropie eines Teilbereichs des Musters aufweist.

Im Folgenden wird anhand der beigefügten schematischen Zeichnung die Erfindung näher erläutert. Es zeigen
Figur 1 einen ersten Gegenstand,
Figur 2 ein Detail aus Figur 1,
Figur 3 einen zweiten Gegenstand,
Figur 4 einen dritten Gegenstand,
Figur 5 einen vierten Gegenstand und
Figur 6 einen fünften Gegenstand.

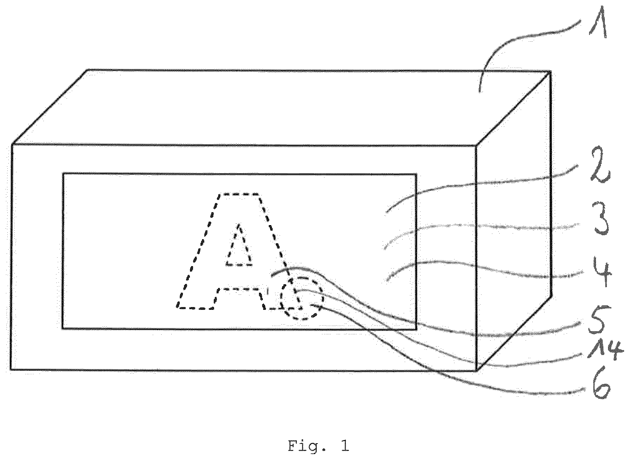

Wie es aus Figuren 1 und 3 bis 6 ersichtlich ist, weist ein Gegenstand 1 einen Druckbereich 2 auf. In dem Druckbereich 2 ist ein mit einem magnetisierbare und/oder magnetische Partikel 7 aufweisenden, farbigen Druckmittel gedrucktes, optisch erkennbares Muster 3 angeordnet. Der Druckbereich 2 weist wenigstens zwei Teilbereiche 4, 5 mit zueinander unterschiedlichen magnetischen Eigenschaften auf.

Die unterschiedlichen magnetischen Eigenschaften können darin liegen, dass die wenigstens zwei Teilbereiche 4, 5 magnetisiert bzw. nicht magnetisiert sind, dass die Teilbereiche 4, 5 hartmagnetisch bzw. weichmagnetisch sind, dass die Teilbereiche 4, 5 magnetisch anisotrop bzw. magnetisch isotrop sind, dass die Teilbereiche 4, 5 in unterschiedliche Raumrichtungen anisotrop sind und/oder dass die Teilbereiche 4, 5 ferromagnetisch bzw. nicht ferromagnetisch sind.

Bei dem Druckmittel kann es sich beispielsweise um eine magnetische Tinte handeln. Das Druckmittel beziehungsweise die Tinte weisen einen Füllgrad von 40 Vol-% bis 70 Vol-%, insbesondere einen Füllgrad von ungefähr 50 Vol-%, an den magnetisierbaren und/oder magnetischen Partikeln 7 auf. Der Rest ist im Wesentlichen ein Lösungsmittel und/oder ein Bindemittel. Das Druckmittel beziehungsweise die Tinte kann einen Farbstoff und/oder Pigmente aufweisen. Die Pigmente können die magnetisierbaren und/oder magnetischen Partikel 7 aufweisen und/oder die Pigmente können aus den magnetisierbaren und/oder magnetischen Partikeln 7 bestehen.

Die magnetisierbaren und/oder magnetischen Partikel 7 können hartmagnetische Partikel, Pigmente, Mikromagneten, keramische Partikel und/oder Seltenerdmetalle aufweisen. Weiterhin können die magnetisierbaren und/oder magnetischen Partikel einen Mittelwert einer Verteilung von Größen der magnetisierbaren und/oder magnetischen Partikel 7 kleiner als 2 µm haben. Beispielsweise können die magnetisierbaren und/oder magnetischen Partikel 7 kugelförmig sein. In diesem Fall ist die Größe der Partikeldurchmesser. Ebenso ist denkbar, dass die Form der magnetisierbaren und/oder magnetischen Partikel 7 von der Kugelform abweicht. In diesem Fall ist die Größe die längste in dem magnetisierbaren und/oder magnetischen Partikel 7 vorkommende Abmessung.

In dem ersten Gegenstand 1 gemäß Figur 1 sind die wenigstens zwei Teilbereiche 4, 5 derart unabhängig von dem optisch erkennbaren Muster 3 angeordnet, dass wenigstens ein Randabschnitt 14 eines der Teilbereiche 4, 5 nicht übereinstimmend mit einem Randabschnitt eines einfarbigen Musterbereichs des Musters 3 angeordnet ist. In dem ersten Gegenstand 1 ist der Druckbereich 2 einfarbig bedruckt und hat die Form eines Rechtecks. Der Druckbereich 2 weist zwei Teilbereiche 4, 5 auf, wobei der Teilbereich 5 eine spezifische, auslesbare Form hat. In dem Fall ist die spezifische, auslesbare Form ein Buchstabe, wobei jedoch auch beliebige andere Formen denkbar sind. Der Rest des Druckbereichs 2 ist von dem Teilbereich 4 gebildet.

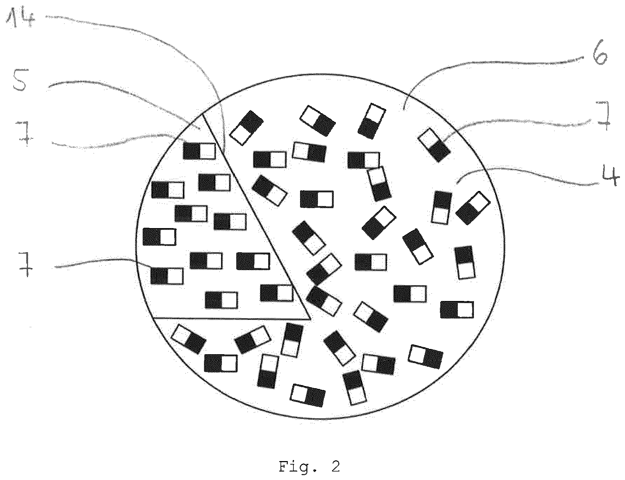

Figur 2 zeigt ein Detail aus Figur 1 und zwar einen Ausschnitt des Druckbereichs 2, in dem sowohl der Teilbereich 4 als auch der Teilbereich 5 vorliegen. Wie es aus Figur 2 ersichtlich ist, weisen beide Teilbereiche 4, 5 die magnetisierbaren und/oder magnetischen Partikel 7 auf. Die magnetisierbaren und/oder magnetischen Partikel 7 gemäß Figur 2 weisen einen Nordpol und einen Südpol auf, was bedeutet, dass sie magnetisiert sind. Beispielsweise kann es sich bei den magnetisierbaren und/oder magnetischen Partikeln 7 gemäß Figur 2 um hartmagnetische Partikel handeln. In dem Teilbereich 5 sind die magnetisierbaren und/oder magnetischen Partikel 7 alle in die gleiche Richtung ausgerichtet, so dass sich in dem Teilbereich 5 eine makroskopische Magnetisierung ergibt, was bedeutet, dass der Teilbereich 5 magnetisiert ist. Die magnetisierbaren und/oder magnetischen Partikel 7 in dem Teilbereich 4 sind statistisch in die Raumrichtungen orientiert, so dass sich keine makroskopische Magnetisierung ergibt, was bedeutet, dass der Teilbereich 4 nicht magnetisiert ist.

Wie es aus Figuren 1 und 2 ersichtlich ist, weist der Druckbereich 2 wenigstens einen inhomogenen Bereich 6 auf, wobei der inhomogene Bereich 6 eine einheitliche Farbe und eine nicht einheitliche Magnetisierung aufweist. Alternativ dazu ist es denkbar, dass der inhomogene Bereich 6 eine einheitliche Magnetisierung und eine nicht einheitliche Farbe aufweist. Es ist auch denkbar, dass der Druckbereich sowohl wenigstens einen inhomogenen Bereich 6 mit einer einheitlicher Farbe und nicht einheitlicher Magnetisierung als auch wenigstens einen weiteren inhomogenen Bereich 6 mit einer nicht einheitlichen Farbe und einer einheitlichen Magnetisierung aufweist.

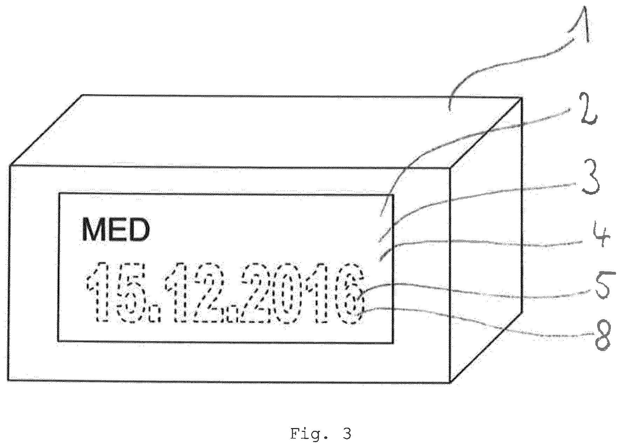

Der zweite Gegenstand 1 gemäß Figur 3 unterscheidet sich von dem ersten Gegenstand 1 gemäß Figuren 1 und 2 darin, dass der Teilbereich 5 die Form eines Mindesthaltbarkeitsdatums 8 hat. Zudem ist der Druckbereich 2 nicht einfarbig, sondern weist einen Schriftzug auf.

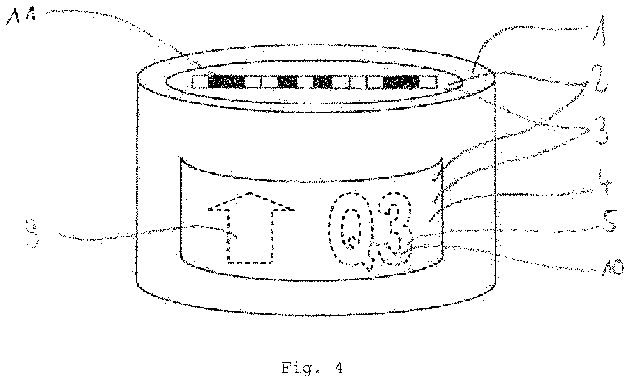

Der dritte Gegenstand 1 gemäß Figur 4 weist wenigstens zwei Teilbereiche 4, 5 auf, aus denen ein Prüfzeichen 10 einer Prüfstelle des dritten Gegenstands 1 ableitbar ist. Aus den wenigstens zwei Teilbereichen 4, 5 ist weiterhin eine Verwendungsinformation 9 bezüglich einer Verwendung des Gegenstands 1 in einer zur Verwendung des Gegenstands 1 vorgesehenen Vorrichtung ableitbar. Beispielsweise kann diese Verwendungsinformation eine Richtungsinformation sein, in der der dritte Gegenstand 1 in die Vorrichtung einzuführen ist. Die wenigstens zwei Teilbereiche 4, 5 gemäß Figur 4 weisen weiterhin eine mit einem Magnetleseverfahren erfassbare binäre Codierung 11 auf.

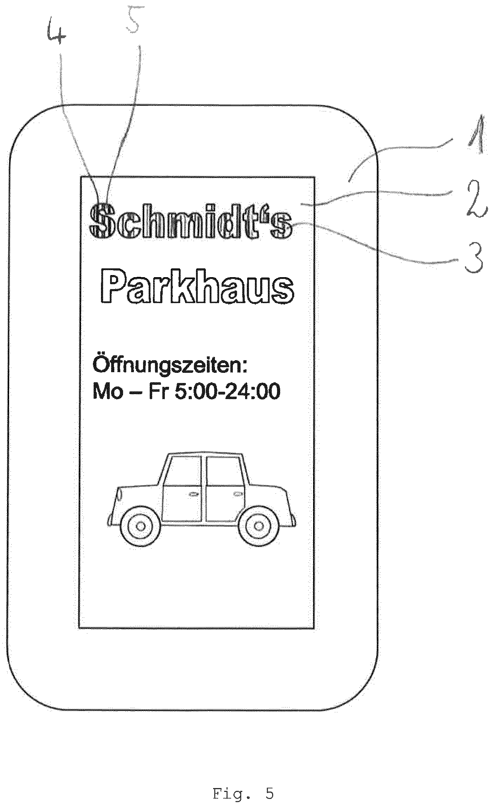

Der vierte Gegenstand 1 gemäß Figur 5 ist ein Parkticket. Der vierte Gegenstand 1 weist den Druckbereich 2 auf, auf dem optisch erfassbare Informationen aufgedruckt sind. Aus den wenigstens zwei Teilbereichen sind magnetisch erfassbare Informationen, wie beispielsweise eine Uhrzeit aufgebracht.

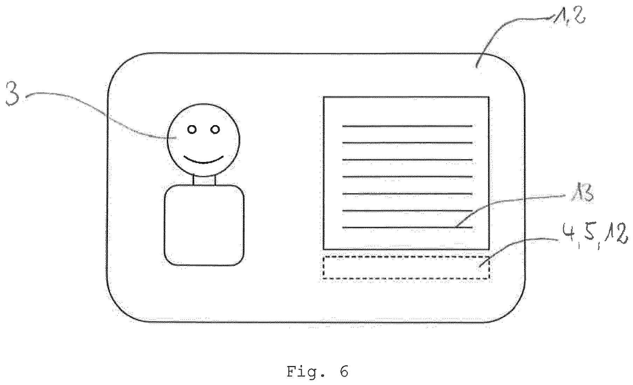

Der fünfte Gegenstand 1 gemäß Figur 6 zeichnet sich dadurch aus, dass eine Information aus einer Gruppe aufweisend eine aus den Teilbereichen 4, 5 magnetisch erfassbare Information und eine in dem optisch erkennbaren Muster 3 enthaltene, optisch erfassbare Information auswertbar ist in Abhängigkeit von der anderen in der Gruppe enthaltenen Information. Eine Information aus der Gruppe weist einen logischen Schlüssel 12 auf, wobei der logische Schlüssel 12 zu einem Entschlüsseln der anderen in der Gruppe enthaltenen Information und/oder zu einem Verifizieren der anderen in der Gruppe enthaltenen Information verwendbar ist. Bei dem fünften Gegenstand 1 gemäß Figur 6 ist der logische Schlüssel 12 durch die wenigstens zwei Teilbereiche 4, 5 gebildet und die verschlüsselte Information 13 ist durch das optisch erkennbare Muster 3 gegeben. Es ist jedoch auch denkbar den logischen Schlüssel 12 aus dem optisch erkennbaren Muster 3 zu bilden und die verschlüsselte Information aus den wenigstens zwei Teilbereichen 4, 5 zu bilden.

Die Gegenstände 1 gemäß Figuren 1 bis 6 können ein industrielles Erzeugnis, ein Ticket für eine Veranstaltung, ein Ticket für den öffentlichen Nahverkehr, ein Ticket für eine Mautzahlung, ein Ticket für einen Parkvorgang, eine Verpackung für Aufträge, eine Verpackung für Produkte und/oder eine Verpackung für Medikamente sein. Aus den wenigstens zwei Teilbereichen 4, 5 der Gegenstände 1 gemäß Figuren 1 bis 6 kann eine Produktidentifizierung, eine Chargennummer einer Produktion, ein Ort der Produktion, ein Datum der Produktion, ein Mindesthaltbarkeitsdatum 8, ein Prüfzeichen 10 einer Prüfstelle des Gegenstands 1 und/oder eine Uhrzeit ableitbar sein.

Das Verfahren zum Aufbringen von Informationen auf die Gegenstände 1 gemäß der Figuren 1 bis 6 weist den Schritt auf:-Magnetisieren wenigstens zweier Teilbereiche 4, 5 mit zueinander unterschiedlichen magnetischen Eigenschaften in dem Druckbereich 2. Weiterhin kann das Verfahren den Schritt aufweise: - vor einem Aushärten eines Bindemittels des Druckmittels, Ausbilden eines Magnetfelds in zumindest einem Teil des Druckbereichs mit Ausrichten der magnetisierbaren und/oder magnetischen Partikel 7 des Druckmittels entlang der Feldlinien des Magnetfelds zum Erzeugen eines magnetisch anisotropen Bereichs. Des Weiteren kann das Verfahren den Schritt aufweisen: - vor einem Aushärten eines Bindemittels des Druckmittels, Ausbilden eines weiteren Magnetfelds, dessen magnetische Feldlinien dem Magnetfeld entgegengesetzt sind, in einem anderen Teil des Druckbereichs mit Ausrichten der magnetisierbaren und/oder magnetischen Partikel 7 des Druckmittels entlang der Feldlinien des weiteren Magnetfelds zum Erzeugen eines weiteren magnetisch anisotropen Bereichs.

Das Verfahren zum Auslesen von Informationen aus den Gegenständen 1 gemäß der Figuren 1 bis 6 weist die Schritte auf: - Bestimmen einer aus dem Muster 3 ableitbaren optisch codierten Information, und - Bestimmen einer aus den magnetischen Teilbereichen 4, 5 magnetisch erfassbaren magnetisch codierten Information. Die magnetisch codierte Information kann beispielsweise durch Messen der Induktion, des Hall-Effektes und/oder des magnetoresistiven Effektes bestimmt werden. Des Weiteren kann das Verfahren den Schritt aufweisen: - Bestimmen einer weiteren Information in Abhängigkeit von der optisch codierten Information und der magnetisch codierten Information. Die magnetisch codierte Information kann eine magnetische Anisotropie eines Teilbereichs des Musters aufweisen.

Anhand von vier Beispielen wird im Folgenden die Erfindung näher erläutert.

In einem ersten Beispiel weist ein Gegenstand 1 einen Druckbereich 2 auf, wobei in dem Druckbereich 2 ein mit einem magnetisierbare und/oder magnetische Partikel 7 aufweisenden, farbigen Druckmittel gedrucktes, optisch erkennbares Muster 3 angeordnet ist, und der Druckbereich 2 wenigstens zwei Teilbereiche 4, 5 mit zueinander unterschiedlichen magnetischen Eigenschaften aufweist, wobei der Teilbereich 4 ferromagnetische Partikel als die magnetisierbaren und/oder magnetischen Partikel 7 aufweist und der Teilbereich 5 keine magnetisierbaren und/oder magnetischen Partikel 7 aufweist.

Der Gegenstand 1 gemäß dem ersten Beispiel kann dadurch hergestellt werden, dass die wenigstens zwei Teilbereiche 4, 5 mit zueinander unterschiedlichen magnetischen Eigenschaften in dem Druckbereich 2 magnetisiert werden, indem zwei verschiedene Druckmittel verwendet werden, wobei das Druckmittel für den Teilbereich 4 die ferromagnetischen Partikel und das Druckmittel für den Teilbereich 5 keine ferromagnetischen Partikel aufweist. Die beiden Druckmittel können die gleiche Farbe oder eine verschiedene Farbe haben.

In einem zweiten Beispiel weist ein Verfahren zum Aufbringen von Informationen auf einen Gegenstand 1 mit einem Druckbereich 2, wobei in dem Druckbereich 2 ein mit einem magnetisierbare und/oder magnetischen Partikel 7 aufweisenden, farbigen Druckmittel gedrucktes, optisch erkennbares Muster 3 angeordnet ist, die Schritte auf: - Rühren des Druckmittels vor dem Drucken des Musters 3 und/oder Führen des Druckmittels vor dem Drucken des Musters 3 durch ein Sieb, dessen Maschen derart dimensioniert sind, dass einzelne magnetisierbare und/oder magnetische Partikel 7 das Sieb passieren können, agglomerierte Partikel jedoch von dem Sieb zurückgehalten werden; - Magnetisieren wenigstens zweier Teilbereiche 4, 5 mit zueinander unterschiedlichen magnetischen Eigenschaften in dem Druckbereich 2. Das zweite Beispiel eignet sich besonders, wenn das Druckmittel eine Tinte ist.

In einem dritten Beispiel weist ein Gegenstand 1 einen Druckbereich 2, wobei in dem Druckbereich 2 ein mit einem magnetisierbare und/oder magnetische Partikel 7 aufweisenden, farbigen Druckmittel gedrucktes, optisch erkennbares Muster 3 angeordnet ist, so dass der Druckbereich 2 eine optisch erfassbare Information aufweist, und wobei der Druckbereich 2 wenigstens zwei Teilbereiche 4, 5 mit zueinander unterschiedlichen magnetischen Eigenschaften aufweist, so dass der Druckbereich 2 eine magnetisch erfassbare Information aufweist, wobei die optisch erfassbare Information und die magnetisch erfassbare Information eine gleiche Information aufweisen. Dabei ist es möglich, dass das Muster 3 identisch mit mindestens einem der Teilbereiche 4, 5 ist. Ebenso ist möglich, dass der mindestens ein Teilbereich 4, 5 verschieden von dem Muster 3 ist. Hierbei ist beispielsweise das Muster 3 ein Schriftzug und die wenigstens zwei Teilbereiche 4, 5 bilden einen Binärcode.

In einem vierten Beispiel weist ein Gegenstand 1 einen Druckbereich 2 auf, wobei in dem Druckbereich 2 ein mit einem magnetisierbare und/oder magnetische Partikel 7 aufweisenden, farbigen Druckmittel gedrucktes, optisch erkennbares Muster 3 angeordnet ist, und wobei der Druckbereich 2 wenigstens zwei Teilbereiche 4, 5 mit zueinander unterschiedlichen magnetischen Eigenschaften aufweist. Eine Information aus einer Gruppe aufweisend eine aus den Teilbereichen 4, 5 magnetisch erfassbare Information und eine in dem optisch erkennbaren Muster 3 enthaltene, optisch erfassbare Information ist auswertbar in Abhängigkeit von der anderen in der Gruppe enthaltenen Information. Eine Information aus der Gruppe weist einen logischen Schlüssel 12 auf, wobei der logische Schlüssel 12 zu einem Entschlüsseln der anderen in der Gruppe enthaltenen Information und/oder zu einem Verifizieren der anderen in der Gruppe enthaltenen Information verwendbar ist. Mindestens einer der Teilbereiche 4, 5 ist dabei quadratisch und der logische Schlüssel 12 ist die Größe des Quadrates. Alternativ weist das Muster 3 ein Quadrat auf und der logische Schlüssel 12 ist die Größe des Quadrates.

### Bezugszeichenliste

- 1: Gegenstand
- 2: Druckbereich
- 3: Muster
- 4: erster Teilbereich
- 5: zweiter Teilbereich
- 6: inhomogener Bereich
- 7: magnetisierbare und/oder magnetische Partikel
- 8: Mindesthaltbarkeitsdatum
- 9: Verwendungsinformation
- 10: Prüfzeichen
- 11: binäre Codierung
- 12: logischer Schlüssel
- 13: verschlüsselte Information
- 14: Randabschnitt

## Patentansprüche

1. Gegenstand (1) mit einem Druckbereich (2), wobei
- in dem Druckbereich (2) ein mit einem magnetisierbare und/oder magnetische Partikel (7) aufweisenden, farbigen Druckmittel gedrucktes, optisch erkennbares Muster (3) angeordnet ist,
- der Druckbereich (2) wenigstens zwei Teilbereiche (4, 5) mit zueinander unterschiedlichen magnetischen Eigenschaften aufweist, **dadurch gekennzeichnet, dass** die durch die wenigstens zwei Teilbereiche geschriebenen Informationen löschbar sind und/oder mit neuen Informationen überschreibbar sind.

2. Gegenstand (1) nach Anspruch 1, wobei
- die wenigstens zwei Teilbereiche (4, 5) derart unabhängig von dem optisch erkennbaren Muster (3) angeordnet sind, dass wenigstens ein Randabschnitt (14) eines der Teilbereiche (4, 5) nicht übereinstimmend mit einem Randabschnitt eines einfarbigen Musterbereichs des Musters (3) angeordnet ist.

3. Gegenstand (1) nach Anspruch 1 oder 2, wobei
- der Druckbereich (2) wenigstens einen inhomogenen Bereich (6) aufweist, wobei der inhomogene Bereich (6) entweder
+ eine einheitliche Farbe und eine nicht einheitliche Magnetisierung aufweist, oder
+ eine einheitliche Magnetisierung und eine nicht einheitliche Farbe aufweist.

4. Gegenstand (1) nach einem der vorstehenden Ansprüche, wobei
- das Druckmittel einen Farbstoff und/oder Pigmente aufweist,
- die Pigmente die magnetisierbaren und/oder magnetischen Partikel (7) aufweisen,
- das Druckmittel einen Füllgrad von 40 Vol-% bis 70 Vol-% an den magnetisierbaren und/oder magnetischen Partikeln aufweist,
- die magnetisierbaren Partikel (7) Pigmente, keramische Partikel und/oder Seltenerdmetalle aufweisen,
- die magnetischen Partikel hartmagnetische Partikel, Pigmente, Mikromagneten, keramische Partikel und/oder Seltenerdmetalle aufweisen, und/oder
- ein Mittelwert einer Verteilung von Größen der magnetisierbaren Partikel (7) kleiner als 2 µm ist.

5. Gegenstand (1) nach einem der vorstehenden Ansprüche, wobei
- einer der Teilbereiche ein anisotroper Bereich ist, wobei der anisotrope Bereich eine magnetische Anisotropie mit einer bevorzugten Magnetisierungsrichtung aufweist, und
- wobei ein weiterer der Teilbereiche ein weiterer anisotroper Bereich ist, wobei die bevorzugte Magnetisierungsrichtung des anisotropen Bereichs von einer bevorzugten Magnetisierungsrichtung des weiteren anisotropen Bereichs verschieden ist.

6. Gegenstand (1) nach einem der vorstehenden Ansprüche, wobei
- eine Information aus einer Gruppe aufweisend
+ eine aus den Teilbereichen (4, 5) magnetisch erfassbare Information und
+ eine in dem optisch erkennbaren Muster (3) enthaltene, optisch erfassbare Information
auswertbar ist in Abhängigkeit von der anderen in der Gruppe enthaltenen Information.

7. Gegenstand (1) nach Anspruch 6, wobei
- eine Information aus der Gruppe einen logischen Schlüssel (12) aufweist, wobei der logische Schlüssel (12) zu einem Entschlüsseln der anderen in der Gruppe enthaltenen Information und/oder zu einem Verifizieren der anderen in der Gruppe enthaltenen Information verwendbar ist.

8. Gegenstand (1) nach einem der vorstehenden Ansprüche, wobei
- der Gegenstand (1) ein industrielles Erzeugnis, ein industriell produziertes Erzeugnis, ein Ticket für eine Veranstaltung, ein Ticket für den öffentlichen Nahverkehr, ein Ticket für eine Mautzahlung, ein Ticket für einen Parkvorgang, eine Verpackung für Aufträge, eine Verpackung für Produkte, ein Etikett und/oder eine Verpackung für Medikamente aufweist, und
- aus den wenigstens zwei Teilbereichen (4, 5) eine Produktidentifizierung, eine Chargennummer einer Produktion, ein Ort der Produktion, ein Datum der Produktion, ein Mindesthaltbarkeitsdatum (8), ein Prüfzeichen (10) einer Prüfstelle des Gegenstands (1), eine Produktbezeichnung, eine Seriennummer, ein charakteristisches Produktkennzeichen und/oder eine Uhrzeit ableitbar ist,
insbesondere wobei
- aus den wenigstens zwei Teilbereichen (4, 5) eine Verwendungsinformation (9) bezüglich einer Verwendung des Gegenstands (1) in einer zur Verwendung des Gegenstands (1) vorgesehenen Vorrichtung ableitbar ist.

9. Gegenstand (1) nach einem der vorstehenden Ansprüche, wobei
- einer (4) der wenigstens zwei Teilbereiche (4, 5) im Wesentlichen nicht magnetisiert ist,
- einer der wenigstens zwei Teilbereiche (4, 5) eine magnetische Polorientierung und/oder eine magnetische Anisotropie senkrecht oder parallel zu einer Druckoberfläche des Druckbereichs aufweist, und/oder
- die wenigstens zwei Teilbereiche (4, 5) eine mit einem Magnetleseverfahren erfassbare binäre Codierung (11) aufweisen.

10. Verfahren zum Aufbringen von Informationen auf einen Gegenstand (1) mit einem Druckbereich (2), wobei in dem Druckbereich (2) ein mit einem magnetisierbare und/oder magnetische Partikel (7) aufweisenden, farbigen Druckmittel gedrucktes, optisch erkennbares Muster (3) angeordnet ist, mit
- Versehen wenigstens zweier Teilbereiche (4, 5) des Drucksbereichs (2) mit zueinander unterschiedlichen magnetischen Eigenschaften, **gekennzeichnet durch**
- Löschen der durch die wenigstens zwei Teilbereiche geschriebenen Informationen und/oder Überschreiben der durch die wenigstens zwei Teilbereiche geschriebenen Informationen mit neuen Informationen.

11. Verfahren nach Anspruch 10, mit
- Magnetisieren wenigstens eines Teilbereichs (4, 5) des Drucksbereichs (2), so dass der Druckbereich (2) wenigstens zwei Teilbereiche (4, 5) mit zueinander unterschiedlichen magnetischen Eigenschaften hat.

12. Verfahren nach Anspruch 10 oder 11, mit
- vor einem Aushärten eines Bindemittels des Druckmittels, Ausbilden eines Magnetfelds in zumindest einem Teil des Druckbereichs mit Ausrichten der magnetisierbaren und/oder magnetischen Partikel des Druckmittels entlang der Feldlinien des Magnetfelds zum Erzeugen eines magnetisch anisotropen Bereichs,
- Schmelzen des Bindemittels und Ausbilden eines neuen Magnetfelds in zumindest einem Teil des Druckbereichs.

13. Verfahren zum Auslesen von Informationen aus einem Gegenstand (1) mit einem Druckbereich (2), wobei in dem Druckbereich (2) ein mit einem magnetisierbare Partikel (7) aufweisenden, farbigen Druckmittel gedrucktes, optisch erkennbares Muster (3) angeordnet ist, und wobei der Druckbereich (2) wenigstens zwei Teilbereiche (4, 5) mit zueinander unterschiedlichen magnetischen Eigenschaften aufweist, mit
- Bestimmen einer aus dem Muster (3) ableitbaren optisch codierten Information, und
- Bestimmen einer aus den magnetischen Teilbereichen (4, 5) magnetisch erfassbaren magnetisch codierten Information, **gekennzeichnet durch**
- Löschen der durch die wenigstens zwei Teilbereiche geschriebenen Informationen und/oder Überschreiben der durch die wenigstens zwei Teilbereiche geschriebenen Informationen mit neuen Informationen.

14. Verfahren nach Anspruch 13, mit
- Bestimmen einer weiteren Information in Abhängigkeit von der optisch codierten Information und der magnetisch codierten Information.

15. Verfahren nach Anspruch 13 oder 14, wobei
- die magnetisch codierte Information eine magnetische Anisotropie eines Teilbereichs des Musters aufweist.

## Claims

1. An object (1) having a printed region (2), wherein
- in the printed region (2), an optically identifiable pattern (3) is arranged, which is printed with a colored printing medium that has magnetizable and/or magnetic particles (7),
- the printed region (2) has at least two subregions (4, 5) with different magnetic properties from each other, **characterized in that** the information that is written by means of the at least two subregions can be deleted and/or overwritten with new information.

2. The object (1) of claim 1, wherein
- the at least two subregions (4, 5) are arranged independently of the optically identifiable pattern (3) in such a way that at least an edge section (14) of one of the subregions (4, 5) is arranged so that it does not coincide with an edge section of a monochrome pattern region of the pattern (3) .

3. The object (1) of claim 1 or 2, wherein
- the printed region (2) has at least one non-homogenous region (6), wherein the non-homogenous region (6) has either
+ a uniform color and a non-uniform magnetization, or
+ a uniform magnetization and a non-uniform color.

4. The object (1) of one of the preceding claims, wherein
- the printing medium includes a colorant and/or pigments,
- the pigments include the magnetizable and/or magnetic particles,
- the printing medium has a filling degree of 40% by volume to 70% by volume of the magnetizable and/or magnetic particles,
- the magnetizable particles (7) include pigments, ceramic particles, and/or rare earth metals,
- the magnetic particles include hard magnetic particles, pigments, micromagnets, ceramic particles, and/or rare earth metals, and/or
- a mean value of a size distribution of the magnetizable particles (7) is less than 2 µm.

5. The object (1) of one of the preceding claims, wherein
- one of the subregions is an anisotropic region, wherein the anisotropic region has a magnetic anisotropy with a preferred magnetization direction, and
- wherein another of the subregions is another anisotropic region, wherein the preferred magnetization direction of the anisotropic region is different from a preferred magnetization direction of the other anisotropic region.

6. The object (1) of one of the preceding claims, wherein
- a piece of information from a group, which includes
+ a piece of information that can be magnetically identified from the subregions (4, 5) and
+ an optically recognizable piece of information contained within the optically identifiable pattern (3),
can be evaluated in dependence on the other piece of information contained in the group.

7. The object (1) of claim 6, wherein
- one piece of information from the group has a logical key (12) and the logical key (12) can be used to decode the other piece of information contained in the group and/or to verify the other piece of information contained in the group.

8. The object (1) of one of the preceding claims, wherein
- the object (1) includes an industrial product, an industrially produced product, a ticket for an event, a ticket for local public transport, a ticket for a toll payment, a ticket for parking, a package for orders, a package for products, a label, and/or a package for drugs, and
- it is possible to infer from the at least two subregions (4, 5) a product identification, a production batch number, a production location, a production date, an expiration date (8), a certification mark (10) of an inspection authority of the object (1), a product name, a serial number, a characteristic product symbol, and/or a time,
in particular wherein
- it is possible to infer from the at least two subregions (4, 5) a usage information (9) about a use of the object (1) in a device provided for the use of the object (1).

9. The object (1) of one of the preceding claims, wherein
- one (4) of the at least two subregions (4, 5) is essentially unmagnetized,
- one of the at least two subregions (4, 5) has a magnetic pole orientation and/or a magnetic anisotropy perpendicular or parallel to a printing surface of the printed region, and/or
- the at least two subregions (4, 5) have a binary encoding (11) that can be detected using a magnetic reading method.

10. A method for applying information to an object (1) having a printed region (2), wherein in the printed region (2), an optically identifiable pattern (3) is arranged, which is printed with a colored printing medium that has magnetizable and/or magnetic particles (7), comprising
- providing at least two subregions (4, 5) of the printed region (2) with different magnetic properties from each other, **characterized by**
- deleting the information that is written by means of the at least two subregions and/or overwriting the information that is written by means of the at least two subregions with new information.

11. The method of claim 10, comprising
- magnetizing at least one subregion (4, 5) of the printed region (2) so that the printed region (2) has at least two subregions (4, 5) with different magnetic properties from each other.

12. The method of claim 10 or 11, comprising
- before a curing of a binding agent of the printing medium, forming a magnetic field in at least one part of the printed region with orienting the magnetizable and/or magnetic particles of the printing medium along the field lines of the magnetic field in order to generate a magnetically anisotropic region,
- melting the binding agent and forming a new magnetic field in at least part of the printed region.

13. A method for reading information from an object (1) having a printed region (2), wherein in the printed region (2), an optically identifiable pattern (3) is arranged, which is printed with a colored printing medium that has magnetizable particles (7), and the printed region (2) has at least two subregions (4, 5) with different magnetic properties from each other, comprising
- determining a piece of optically encoded information that can be inferred from the pattern (3), and
- determining a piece of magnetically encoded information that can be magnetically identified from the magnetic subregions (4, 5),
**characterized by**
- deleting the information that is written by means of the at least two subregions and/or overwriting the information that is written by means of the at least two subregions with new information.

14. The method of claim 13, comprising
- determining an additional piece of information in dependence on the optically encoded information and the magnetically encoded information.

15. The method of claim 13 or 14, wherein
- the magnetically encoded information has a magnetic anisotropy of a subregion of the pattern.

## Revendications

1. Objet (1) avec une zone d'impression (2), dans lequel
- un motif reconnaissable optiquement (3) imprimé avec un moyen d'impression coloré comprenant des particules magnétisables et/ou magnétiques (7) est agencé dans la zone d'impression (2),
- la zone d'impression (2) comporte au moins deux parties (4, 5) aux propriétés magnétiques mutuellement différentes, **caractérisée en ce que** les informations écrites par les au moins deux parties peuvent être effacées et/ou peuvent être écrasées par de nouvelles informations.

2. Objet (1) selon la revendication 1, dans lequel
- les au moins deux parties (4, 5) sont agencées indépendamment du motif reconnaissable optiquement (3) de telle sorte qu'au moins une portion de bord (14) de l'une des parties (4, 5) est agencée de manière à ne pas coïncider avec une portion de bord d'une zone de motif monochrome du motif (3).

3. Objet (1) selon la revendication 1 ou 2, dans lequel
- la zone d'impression (2) comporte au moins une zone non homogène (6), la zone non homogène (6) comportant
+ une couleur uniforme et une aimantation non uniforme, ou
+ une aimantation uniforme et une couleur non uniforme.

4. Objet (1) selon l'une des revendications précédentes, dans lequel
- le moyen d'impression comporte un colorant et/ou des pigments,
- les pigments comprennent des particules magnétisables et/ou magnétiques (7),
- le moyen d'impression a un taux de remplissage de 40% en volume à 70% en volume des particules magnétisables et/ou magnétiques,
- les particules magnétisables (7) comprennent des pigments, des particules céramiques et/ou des métaux des terres rares,
- les particules magnétiques comprennent des particules magnétiques dures, des pigments, des micro-aimants, des particules céramiques et/ou des métaux des terres rares, et/ou
- une valeur moyenne d'une distribution de tailles des particules magnétisables (7) est inférieure à 2 µm.

5. Objet (1) selon l'une des revendications précédentes, dans lequel
- l'une des parties est une zone anisotrope, la zone anisotrope ayant une anisotropie magnétique avec une direction préférée d'aimantation, et
- une autre des parties étant une autre zone anisotrope, la direction préférée d'aimantation de la zone anisotrope étant différente d'une direction préférée d'aimantation de l'autre zone anisotrope.

6. Objet (1) selon l'une des revendications précédentes, dans lequel
- une information d'un groupe comportant
+ une information détectable magnétiquement à partir des parties (4, 5) et
+ une information reconnaissable optiquement contenue dans le motif reconnaissable optiquement (3)
peut être évaluée en fonction des autres informations contenues dans le groupe.

7. Objet (1) selon la revendication 6, dans lequel
- une information du groupe possède une clé logique (12), la clé logique (12) étant utilisable pour décrypter les autres informations contenues dans le groupe et/ou pour vérifier les autres informations contenues dans le groupe.

8. Objet (1) selon l'une des revendications précédentes, dans lequel
- l'objet (1) comprend un produit industriel, un produit de fabrication industrielle, un ticket pour un événement, un ticket pour les transports publics locaux, un ticket pour un paiement de péage, un ticket pour un parking, un emballage pour les commandes, un emballage pour les produits, une étiquette et/ou un emballage pour les médicaments, et
- une identification du produit, un numéro de lot d'une production, un lieu de production, une date de production, une date limite de consommation (8), une marque de certification (10) d'un centre de test de l'objet (1), un nom de produit, un numéro de série, un identifiant de produit caractéristique et/ou une heure peuvent être dérivés à partir des au moins deux parties (4, 5),
en particulier
- une information d'utilisation (9) relative à une utilisation de l'objet (1) dans un dispositif prévu pour l'utilisation de l'objet (1) peut être dérivée à partir des au moins deux parties (4, 5).

9. Objet (1) selon l'une des revendications précédentes, dans lequel
- l'une (4) des au moins deux parties (4, 5) n'est essentiellement pas magnétisée,
- l'une des au moins deux parties (4, 5) présente une orientation de pôle magnétique et/ou une anisotropie magnétique perpendiculaire ou parallèle à une surface d'impression de la zone d'impression, et/ou
- les au moins deux parties (4, 5) ont un code binaire (11) qui peut être détecté à l'aide d'une méthode de lecture magnétique.

10. Procédé pour appliquer des informations à un objet (1) avec une zone d'impression (2), dans lequel un motif reconnaissable optiquement (3) imprimé avec un moyen d'impression coloré comprenant des particules magnétisables et/ou magnétiques (7) est agencé dans la zone d'impression (2), comprenant
- fournir au moins deux parties (4, 5) de la zone d'impression (2) avec des propriétés magnétiques mutuellement différentes, **caractérisée par**
- la suppression des informations écrites par les au moins deux parties et/ou l'écrasement des informations écrites par les au moins deux parties par de nouvelles informations.

11. Procédé selon la revendication 10, comprenant
- magnétiser au moins une partie (4, 5) de la zone d'impression (2) de sorte que la zone d'impression (2) présente au moins deux parties (4, 5) aux propriétés magnétiques mutuellement différentes.

12. Procédé selon la revendication 10 ou 11, comprenant
- avant le durcissement d'un liant du moyen d'impression, former un champ magnétique dans au moins une partie de la zone d'impression avec alignement des particules magnétisables et/ou magnétiques du moyen d'impression le long des lignes de champ du champ magnétique à générer une zone magnétiquement anisotrope,
- faire fondre le liant et former un nouveau champ magnétique dans au moins une partie de la zone d'impression.

13. Procédé pour lire des informations à partir d'un objet (1) avec une zone d'impression (2), dans lequel un motif reconnaissable optiquement (3) imprimé avec un moyen d'impression coloré comprenant des particules magnétisables (7) est agencé dans la zone d'impression (2) et dans lequel la zone d'impression (2) comporte au moins deux parties (4, 5) aux propriétés magnétiques mutuellement différentes, comprenant
- déterminer une information codée optiquement pouvant être dérivée du motif (3), et
- déterminer une information codée magnétiquement détectable magnétiquement à partir des parties magnétiques (4, 5), **caractérisée par**
- la suppression des informations écrites par les au moins deux parties et/ou l'écrasement des informations écrites par les au moins deux parties par de nouvelles informations.

14. Procédé selon la revendication 13, comprenant
- déterminer une information supplémentaire en fonction de l'information codée optiquement et de l'information codée magnétiquement.

15. Procédé selon la revendication 13 ou 14, dans lequel
- l'information codée magnétiquement présente une anisotropie magnétique d'une partie du motif.
